# EUROPÄISCHE PATENTSCHRIFT

(11) **EP 0 778 925 B1**
(45) Veröffentlichungstag und Bekanntmachung des Hinweises auf die Patenterteilung: **04.07.2001**
(21) Anmeldenummer: 96904069.0
(22) Anmeldetag: 13.02.1996
(51) Int. Cl.: F16C 1/22

(54) **VORRICHTUNG ZUR SELBSTTÄTIGEN LÄNGENKORREKTUR VON FLEXIBLEN BETÄTIGUNGSZÜGEN, INSBESONDERE SEILNACHSTELLVORRICHTUNG**
DEVICE FOR AUTOMATICALLY COMPENSATING THE LENGTH OF FLEXIBLE CABLE CONTROL MEANS, ESPECIALLY CABLE ADJUSTERS
DISPOSITIF DE COMPENSATION AUTOMATIQUE DE LA LONGUEUR D'ELEMENTS FLEXIBLES DE COMMNANDE PAR CABLE, EN PARTICULIER DISPOSITIF DE REGLAGE DU CABLE

(30) Priorität: 13.02.1995 DE 19504497
(43) Veröffentlichungstag der Anmeldung: 18.06.1997
(73) Patentinhaber: KÜSTER & Co. GmbH, 35630 Ehringshausen (DE)
(72) Erfinder: MEDEBACH, Thomas, D-35582 Wetzlar-Dudenhofen (DE); MARSCHOLL, Klaus, D-35630 Ehringshausen-Breitenbach (DE)
(74) Vertreter: Müller, Eckhard, Dr.
(86) Internationale Anmeldenummer: EP9600596
(87) Internationale Veröffentlichungsnummer: WO9625604

(56) Entgegenhaltungen:
- EP-A- 0 342 994
- WO-A-86/05849
- WO-A-93/22571
- FR-A- 2 626 231
- GB-A- 2 168 123

## Beschreibung

Die Erfindung betrifft eine Längenkorrekturvorrichtung für flexible Betätigungszüge o. dgl., insbesondere Seilnachstellvorrichtung, mit einer Schlauchfassung, die eine Aufnahme für einen Schlauch des Betätigungszuges sowie im Bereich eines angeformten Fortsatzes einen Durchgangskanal für das Seil des Betätigungszuges aufweist und deren Außenwand im Bereich des Fortsatzes mit einer Radialverzahnung versehen ist, mit einem i. w. hülsenartig ausgebildeten Grundkörper mit einer Längsbohrung, in der der Fortsatz längsverschieblich geführt ist und mit einem mit der Radialverzahnung zusammenwirkenden Rastelement.

Eine derartige Vorrichtung zur Längenkorrektur von mechanisch-flexiblen Fernbetätigungen ist bspw. aus der WO 93/22571, insbesondere Figur 4 und zugehöriger Beschreibung bekannt. Diese Längenkorrekturvorrichtung zeichnet sich dadurch aus, daß sie automatisch ein Nachstellen der Länge der Vorrichtung durchführt, sobald das erforderliche Maß an Vorspannung, z. B. des Schlauches einer mechanisch-flexiblen Fernbetätigung, nicht mehr gegeben ist. Hinsichtlich der Funktion hat sich diese bekannte Vorrichtung durchaus bewährt, allerdings weist die Vorrichtung einen recht aufwendigen konstruktiven Aufbau auf und ist das Rastelement u. U. der Gefahr der Verschmutzung ausgesetzt, wodurch eine Beeinträchtigung der Funktionsfähigkeit der Vorrichtung herbeigeführt werden könnte. Demgegenüber liegt der Erfindung die Aufgabe zugrunde, eine Vorrichtung der eingangs genannten Art dahingehend weiterzubilden, daß der konstruktive Aufbau vereinfacht, und die Funktionssicherheit erhöht ist und die Längenkorrektur selbsttätig erfolgt.

Diese Aufgabe wird nach der Erfindung i. w. dadurch gelöst, daß der Grundkörper in einem hinteren Abschnitt eine an den vorderen Abschnitt mit der Längsbohrung anschließende Aufnahme aufweist, in der das mit dem Fortsatz in Eingriff stehende Rastelement mittels des Fortsatzes zwischen zwei Endstellungen verschiebbar aufgenommen und von einer Verriegelungsstellung in eine Entriegelungsstellung überführbar ist, wobei zwischen dem Grundkörper und der Schlauchfassung ein Druckfederelement angeordnet ist, unter dessen Wirkung die Schlauchfassung zur Längenkorrektur aus dem Grundkörper herausbewegbar ist.

Durch diese Maßnahmen wird eine äußerst einfach aufgebaute Längenkorrekturvorrichtung angegeben, die zum einen nur aus wenigen Teilen besteht und bei der zum anderen das Rastelement gegen Verschmutzungen geschützt in einer Aufnahme des Grundkörpers angeordnet ist, wodurch einer Verschmutzungsgefahr entgegengewirkt und die Funktionssicherheit erhöht wird.

Gemäß einer vorteilhaften Ausgestaltung der Erfindung ist das Rastelement als den Fortsatz umfassende Hülse mit angeformten Federarmen ausgebildet, wobei die Federarme einseitig mit innenliegenden Rastzähnen versehen sind. Das hülsenartige Rastelement ist somit sicher und geschützt geführt zwischen der Innenwand der Aufnahme des Grundkörpers und der Außenwand des Fortsatzes der Schlauchfassung.

Nach einem anderen vorteilhaften Merkmal der Erfindung weisen die Federarme endseitig eine außenliegende Schrägfläche auf, die in der Verriegelungsstellung des Rastelements einem i. w. kegelförmig ausgebildeten Sitz der Aufnahme aufliegen. Hierdurch ist sicher dafür gesorgt, daß eine Längenverstellung der Vorrichtung mit einem in der Verriegelungsstellung befindlichen Rastelement ausgeschlossen ist.

Von Vorteil weist das Rastelement in einem Endabschnitt eine umlaufende, ggf. mit Schlitzen versehene Ringwand auf, die innenseitig mit einer Stufe und/oder Außenseite mit einer Auflaufschräge versehen ist. Während die innenseitig vorgesehene Stufe zur Aufnahme eines Teilabschnitts der Schlauchfassung in der zusammengeschobenen Stellung und damit einer Reduzierung der Baugröße der Vorrichtung dient, wirkt die Ringwand selbst als ein Anschlag für das in der Aufnahme befindliche Rastelement zur Begrenzung des Verschiebeweges. Die Auflaufschrägen erleichtern ein erstmaliges Einbringen des Rastelementes in die Aufnahme des Grundkörpers während der Montage der Vorrichtung.

Zur Begrenzung des Verschiebeweges des Rastelements weist die Aufnahme des Grundkörpers im Bereich des hinteren Abschnitts einen umlaufenden Steg auf, der als Anschlag für das Rastelement in der Entriegelungsstellung dient.

Von Vorteil ist an einem Endabschnitt der Schlauchfassung ein nach außen weisender Kragen oder Bund vorgesehen, wobei das Druckfederelement zwischen diesem Bund und einem ringförmigen Widerlager des Grundkörpers eingespannt ist.

Im Übergangsbereich zwischen der Schlauchfassung und dem Fortsatz ist außenseitig ein umlaufender, ringförmiger Absatz ausgebildet, der der Stufe des Rastelements in der zusammengeschobenen Stellung der Vorrichtung anlegbar ist.

Gemäß einer weiteren vorteilhaften Weiterbildung der Erfindung ist die Länge der Wegstrecke des Verschiebeweges des Rastelements zwischen den beiden Endstellungen durch die Einstellung einer vorgegebenen Seillose definiert. Somit ist für eine definierte Restseillose im Betätigungszugsystem gesorgt, wodurch eine Verspannung durch Nachstellbewegungen vorgebeugt ist.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

### Es zeigen:

- Figur 1: ein Ausführungsbeispiel der Seilnachstellvorrichtung nach der Erfindung in aufgeschnittener Perspektivdarstellung mit dem Rastelement in der Entriegelungsstellung und
- Figur 2: die Seilnachstellvorrichtung gemäß Figur 1 in ausgefederter Position mit dem Rastelement in der Verriegelungsstellung.

Die in den Figuren darstellte Seilnachstellvorrichtung 10 für flexible Betätigungszüge o. dgl. weist eine Schlauchfassung 16 auf. Die Schlauchfassung 16 besitzt eine Aufnahme 18 für einen Schlauch des Betätigungszuges sowie im Bereich eines angeformten Fortsatzes 20 einen Durchgangskanal 46 für das Seil des Betätigungszuges. Der Durchgangskanal 46 ist bevorzugt zum Ende des Fortsatzes 20 konisch erweitert. Die Außenwand des Fortsatzes 20 ist zumindest bereichsweise mit einer Radialverzahnung 22 versehen.

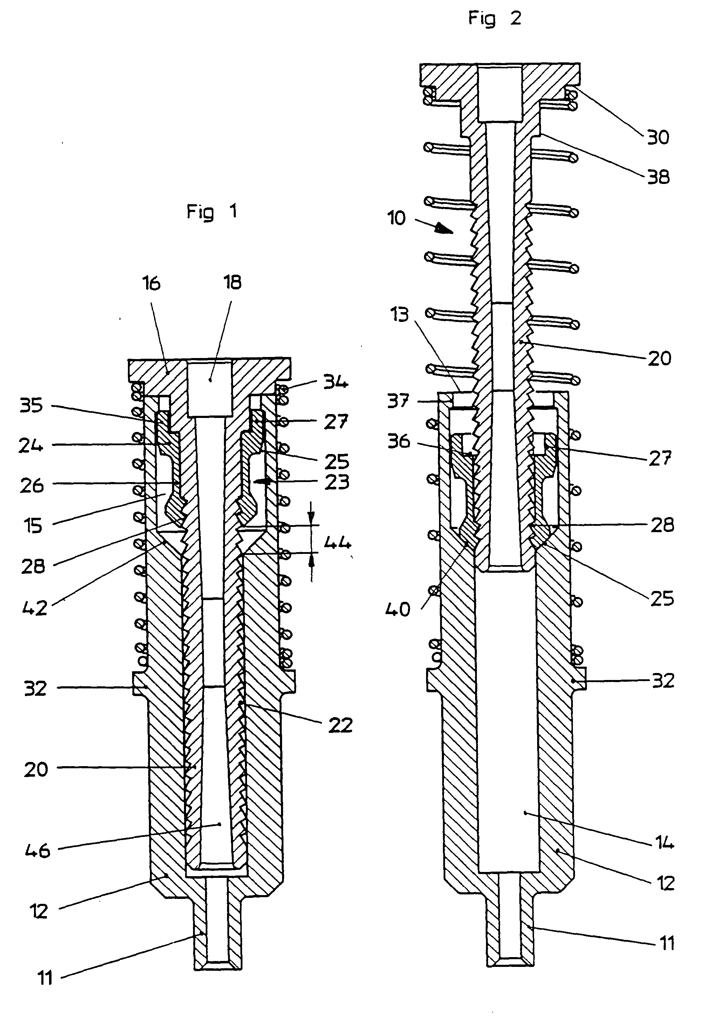

Ein i. w. hülsenartig ausgebildeter Grundkörper 12, welcher bspw. mit dem vorderen Abschnitt 11 fest am Abgang eines Seiltrommelgehäuses eines Seilzug-Fensterhebers, aber auch bei einem Bremszug oder einem Kupplungszug, angebracht sein kann, ist mit einer Längsbohrung 14 versehen, in der der Fortsatz 20 längsverschieblich geführt ist. In einem hinteren Abschnitt 13 weist der Grundkörper 12 eine an den vorderen Abschnitt 11 mit der Längsbohrung 14 anschließende Aufnahme 15 auf. In der Aufnahme 15 ist ein Rastelement 23, welches mit der Radialverzahnung 22 des Fortsatzes 20 zusammenwirkt, zwischen zwei Endstellungen verschiebbar aufgenommen. Die in der Figur 1 dargestellte rechte Endstellung entspricht dabei der Entriegelungsstellung, während das Rastelement 23 sich in der in Figur 2 dargestellten linken Endstellung in der Verriegelungsstellung befindet.

Zwischen dem Grundkörper 12 und der Schlauchfassung 16 ist ein Druckfederelement 34 angeordnet, unter dessen Wirkung die Schlauchfassung 16 zur Längenkorrektur aus dem Grundkörper 12 heraus bewegbar ist.

Das Rastelement 23 ist als den Fortsatz 20 umfassende Hülse 24 mit angeformten Federarmen 26 ausgebildet, wobei die Federarme 26 endseitig mit innenliegenden Rastzähnen 28 versehen sind. Endseitig weisen die Federarme 26 außenliegende Schrägflächen 42 auf, die in der Verriegelungsstellung des Rastelements 23 einem i. w. kegelförmig ausgebildeten Sitz 40 der Aufnahme 15 des Grundkörpers 12 aufliegen.

In einem Endabschnitt 35 weist das Rastelement 23 eine umlaufende, ggf. mit Schlitzen versehene Ringwand 27 auf, die innenseitig mit einer Stufe 36 und außenseitig mit einer Auflaufschräge 25 versehen ist.

Die Aufnahme 15 ist im Bereich des hinteren Abschnitts 13 des Grundkörpers 12 von einem umlaufenden Steg 37 begrenzt, der als Anschlag für das Rastelement 23 in der Entriegelungsstellung dient. Im mittleren Bereich des Grundkörpers 12 ist außen ein ringförmiges Widerlager 32 für das Druckfederelement 34 angeordnet. Weiterhin stützt sich das Druckfederelement 34 an einem endseitig angeordneten Bund 30 der Schlauchfassung 16 ab. In einem Übergangsbereich zwischen der Schlauchfassung 16 und dem Fortsatz 20 ist außenseitig ein umlaufender Absatz 38 gebildet, der der Stufe 36 des Rastelements 23 anlegbar ist. Die Länge der Wegstrecke 44 des Verschiebeweges des Rastelements 23 zwischen den beiden Endstellungen dient zur Einstellung einer vorgegebenen Seillose des Betätigungszuges.

Die beschriebene Seilnachstellvorrichtung 10 funktioniert wie folgt:
Wenn eine Lose im Seil des Betätigungszuges auftritt und demgemäß eine Verlängerung des das Seil umgebenden Schlauches des Betätigungszuges erforderlich ist, ist zur Längenkorrektur ein Herausschieben der Schlauchfassung 16 aus dem Grundkörper 12, sozusagen also eine Verlängerung der Seilnachstellvorrichtung 10 erforderlich. Dieses Herausschieben der Schlauchfassung 16 aus dem Grundkörper 12 wird durch das zwischen den beiden Elementen angeordnete Druckfederelement 34 bewirkt. Während der Verschiebung der Schlauchfassung 16 aus dem Grundkörper 12 heraus wird das über die Radialverzahnung 22 mit der Schlauchfassung 16 in Eingriff stehende Rastelement 23 zunächst mitgenommen, bis der Endabschnitt 35 der Ringwand 27 des Rastelements 23 gegen einen Steg 37 zur Begrenzung der Aufnahme 15 des Grundkörpers 12 stößt. Sofern die Schlauchfassung 16 unter der Wirkung des Druckfederelementes 34 noch weiter als diese Wegstrecke 44 aus dem Grundkörper 12 herausgeschoben werden kann, werden die Federarme 26 des Rastelements 23 aufgespreizt, so daß die Radialverzahnung 22 des Fortsatzes 20 unter den Rastzähnen 28 des Rastelementes 23 hindurchratscht.

Wirkt nun auf das Seil des Betätigungszuges eine Kraft in Richtung des vorderen Abschnitts 11 des Grundkörpers 12, wird die Federkraft des Druckfederelements 34 überwunden, so daß sich die Schlauchfassung 16 mit dem einstückig angeformten Fortsatz 20 sowie dem auf dem Fortsatz 20 angeordneten Rastelement 23 in der Aufnahme 15 des Grundkörpers 12 in Richtung des kegelförmigen Sitzes 40 verschiebt. Am Ende der Wegstrecke 44 des Verschiebeweges liegen die Schrägflächen 42 der Federarme 26 des Rastelements 23 dem kegelförmigen Sitz 40 der Aufnahme 15 an, wobei sich das Rastelement 23 dann in der Verriegelungsstellung befindet.

Erst dann wird durch die weiter auf das Seil wirkende Kraft in eine Verschiebung des Seils innerhalb des Schlauches des Betätigungszuges umgesetzt und die nötige Druckkraft zwischen Grundkörper 12, Rastelement 23 und Schlauchfassung 16 als Gegenkraft für die Zugkraft des Seiles aufgebaut. Dies bedeutet, daß über die Wegstrecke 44 des Verschiebeweges des Rastelements 23 in der Aufnahme 15 eine definierte Restseillose im Betätigungszugsystem verbleibt, wodurch Verspannungen durch Nachstellbewegungen vorgebeugt wird.

### Bezugszeichenliste

- 10 -: Seilnachstellung
- 11 -: vorderer Abschnitt
- 12 -: Grundkörper
- 13 -: hinterer Abschnitt
- 14 -: Längsbohrung
- 15 -: Aufnahme
- 16 -: Schlauchfassung
- 18 -: Aufnahme
- 20 -: Fortsatz
- 22 -: Radialverzahnung
- 23 -: Rastelement
- 24 -: Hülse
- 25 -: Auflaufschräge
- 26 -: Federarm
- 27 -: Ringwand
- 28 -: Rastzahn
- 30 -: Bund
- 32 -: Widerlager
- 34 -: Druckfederelement
- 35 -: Endabschnitt
- 36 -: Stufe
- 37 -: Steg
- 38 -: Absatz
- 40 -: kegelförmiger Sitz
- 42 -: Schrägfläche
- 44 -: Wegstrecke
- 46 -: Durchgangskanal

## Patentansprüche

1. Längenkorrekturvorrichtung für flexible Betätigungszüge o. dgl., insbesondere Seilnachstellvorrichtung (10), mit einer Schlauchfassung (16), die eine Aufnahme (18) für einen Schlauch des Betätigungszuges sowie im Bereich eines angeformten Fortsatzes (20) einen Durchgangskanal (46) für das Seil des Betätigungszuges aufweist und deren Außenwand im Bereich des Fortsatzes (20) mit einer Radialverzahnung (22) versehen ist, mit einem i. w. hülsenartig ausgebildeten Grundkörper (12) mit einer Längsbohrung (14), in der der Fortsatz (20) längsverschieblich geführt ist und mit einem mit der Radialverzahnung (22) zusammenwirkenden Rastelement (23), dadurch gekennzeichnet, daß die Längenkorrekturvorrichtung eine selbsttätige Längenkorrekturvorrichtung ist und daβ der Grundkörper (12) in einem hinteren Abschnitt (13) eine an den vorderen Abschnitt (11) mit der Längsbohrung (14) anschließende Aufnahme (15) aufweist, in der das mit dem Fortsatz (20) in Eingriff stehende Rastelement (23) mittels des Fortsatzes (20) zwischen zwei Endstellungen verschiebbar aufgenommen und von einer Verriegelungsstellung eine Entriegelungsstellung überführbar ist, wobei zwischen dem Grundkörper (12) und der Schlauchfassung (16) ein Druckfederelement (34) angeordnet ist, unter dessen Wirkung die Schlauchfassung (16) zur Längenkorrektur aus dem Grundkörper (12) herausbewegbar ist.

2. Vorrichtung nach Anspruch 1, dadurch gekennzeichnet, daß das Rastelement (23) als den Fortsatz (20) umfassende Hülse mit angeformten Federarmen (26) ausgebildet ist, wobei die Federarme (26) endseitig mit innenliegenden Rastzähnen (28) versehen sind.

3. Vorrichtung nach Anspruch 2, dadurch gekennzeichnet, daß die Federarme (26) endseitig eine außenliegende Schrägfläche (42) aufweisen, die in der Verriegelungsstellung des Rastelements (23) einem i. w. kegelförmig ausgebildeten Sitz (40) der Aufnahme (15) aufliegen.

4. Vorrichtung nach einem der vorhergehenden Ansprüche, dadurch gekennzeichnet, daß das Rastelement (23) in einem Endabschnitt (35) eine umlaufende, ggf. mit Schlitzen versehene Ringwand (27) aufweist, die innenseitig mit einer Stufe (36) und/oder außenseitig mit einer Auflaufschräge (25) versehen ist.

5. Vorrichtung nach einem der vorhergehenden Ansprüche, dadurch gekennzeichnet, daß die Aufnahme (15) im Bereich des hinteren Abschnitts (13) des Grundkörpers (12) von einem umlaufenden Steg (37) begrenzt wird, der als Anschlag für das Rastelement (23) in der Entriegelungsstellung dient.

6. Vorrichtung nach einem der vorhergehenden Ansprüche, dadurch gekennzeichnet, daß das Druckfederelement (34) zwischen einem Bund (30) der Schlauchfassung (16) und einem ringförmigen Widerlager (32) des Grundkörpers 12 eingespannt ist.

7. Vorrichtung nach einem der vorhergehenden Ansprüche, dadurch gekennzeichnet, daß im Übergangsbereich zwischen Schlauchfassung (16) und Fortsatz (20) außenseitig ein umlaufender Absatz (38) ausgebildet ist, der der Stufe (36) des Rastelements (23) anlegbar ist.

8. Vorrichtung nach einem der vorhergehenden Ansprüche, dadurch gekennzeichnet, daß die Länge der Wegstrecke (44) zwischen den beiden Endstellungen des Rastelements (23) durch die Einstellung einer vorgegebenen Seillose definiert ist.

## Claims

1. Length correcting device for flexible actuating pulls or the like, especially a cable adjusting device (10), comprising a hose grip (16), which has a recess (18) for a hose of the actuating pull and in the region of an integrally formed extension (20) a through-channel (46) for the cable of the actuating pull and the outer wall of which is provided in the region of the extension (20) with a radial toothing (22), a substantially sleeve-like base body (12) with a longitudinal bore (14), in which the extension (20) is guided to be longitudinally displaceable, and a detent element (23) co-operating with the radial toothing (22), characterised in that the length correcting device is an automatic length correcting device and that the base body (12) has in a rearward portion (13) a receptacle (15) which adjoins the forward portion (11) with the longitudinal bore and in which the detent element (23) standing in engagement with the extension (20) is received to be displaceable between two end settings by means of the extension (20) and is transferable from a locked setting to an unlocked setting, wherein a compression spring element (34), through the action of which the hose grip (16) is movable out of the base body (12) for the correction of length, is arranged between the base body (12) and the hose grip (16).

2. Device according to claim 1, characterised in that the detent element (23) is constructed as a sleeve, which surrounds the extension (20), with integrally formed spring arms (26), wherein the spring arms (26) are provided at the ends with internal detent teeth (28).

3. Device according to claim 2, characterised in that the spring arms (26) have at the ends an external chamfered surface (42) which in the locked setting of the detent element (23) bears against a substantially conically formed seat (40) of the receptacle (15).

4. Device according to one of the preceding claims, characterised in that the detent element (23) has in one end portion (35) an encircling annular wall (27) which is optionally provided with slots and which is provided at the inside with a step (36) and/or at the outside with an entry chamfer (25).

5. Device according to one of the preceding claims, characterised in that the receptacle (15) is bounded in the region of the rearward portion (13) of the base body (12) by an encircling web (37) which serves as an abutment for the detent element (23) in the unlocked setting.

6. Device according to one of the preceding claims, characterised in that the compression spring element (34) is clamped between a collar (30) of the hose grip (16) and an annular counterbearing (32) of the base body (12).

7. Device according to one of the preceding claims, characterised in that an encircling protrusion (38), against which the step (36) of the detent element (23) can bear, is formed at the outer side in the transition region between hose grip (16) and extension (20).

8. Device according to one of the preceding claims, characterised in that the length of the travel path (44) between the two end settings of the detent element (23) is defined by the setting of a predetermined cable slack.

## Revendications

1. Dispositif de compensation de la longueur pour des éléments flexibles de commande par câble ou équivalents, en particulier dispositif de réglage du câble (10) possédant un support de flexible (16), qui présente un logement (18) pour un flexible de l'élément de commande par câble et, dans la zone d'un prolongement (20) façonné, un canal de passage (46) pour le câble de l'élément de commande par câble et dont la paroi externe est pourvue dans la zone du prolongement (20) d'une denture radiale (22), possédant un corps de base (12) conçu essentiellement en forme de gaine et présentant un perçage longitudinal (14) dans lequel le prolongement (20) est amené par déplacement longitudinal, et possédant un élément d'arrêt (23) collaborant avec une denture radiale (22), caractérisé en ce que le dispositif de compensation de la longueur est un dispositif de compensation de la longueur automatique et en ce que le corps de base (12) présente dans un segment arrière (13) un logement (15) raccordé au segment avant (11) par le perçage longitudinal (14) et dans lequel l'élément d'arrêt (23) en prise avec le prolongement (20) peut être logé d'une façon mobile entre deux positions d'extrémité au moyen du prolongement (20) et passer d'une position de verrouillage à une position de déverrouillage, un élément de ressort à pression (34) étant disposé entre le corps de base (12) et le support de flexible (16), dont l'action permet de déplacer le support de flexible (16) depuis le corps de base (12) pour compenser la longueur.

2. Dispositif selon la revendication 1, caractérisé en ce que l'élément d'arrêt (23) est conçu en tant que gaine entourant le prolongement (20) avec des bras élastiques (26) façonnés, les bras élastiques (26) étant pourvus côté extrémité de dents d'arrêt (28) internes.

3. Dispositif selon la revendication 2, caractérisé en ce que les bras élastiques (26) présentent côté extrémité une surface oblique vers l'extérieur (42), qui, dans la position de verrouillage de l'élément d'arrêt (23), repose contre un ajustement du logement (15) conçu essentiellement en forme de cône (40).

4. Dispositif selon l'une des revendications précédentes, caractérisé en ce que l'élément d'arrêt (23) présente dans un segment d'extrémité (35) une paroi annulaire (27) tournante éventuellement pourvue de rainures, laquelle est pourvue côté interne d'un gradin (36) et/ou côté externe d'un chanfrein d'arrêt (25).

5. Dispositif selon l'une des revendications précédentes, caractérisé en ce que le logement (15) est délimité dans la zone du segment arrière (13) du corps de base (12) par une traverse périphérique (37) qui sert de butée pour l'élément d'arrêt (23) dans la position de déverrouillage.

6. Dispositif selon l'une des revendications précédentes, caractérisé en ce que l'élément de ressort à pression (34) est tendu entre une attache (30) du support de flexible (16) et une culée annulaire (32) du corps de base (12).

7. Dispositif selon l'une des revendications précédentes, caractérisé en ce que, dans la zone de transition entre le support de flexible (16) et le prolongement (20) est conçu côté externe un épaulement tournant (38) qui peut être placé contre le gradin (36) de l'élément d'arrêt (23).

8. Dispositif selon l'une des revendications précédentes, caractérisé en ce que la longueur de la course (44) entre les deux positions d'extrémité de l'élément d'arrêt (23) est définie par le réglage d'un mou de câble prédéfini.
